# EUROPEAN PATENT APPLICATION

(11) **EP 4 783 544 A1**
(43) Date of publication of application: **29.07.2026**
(21) Application number: 24878592.5
(22) Date of filing: 22.07.2024
(51) Int. Cl.: H04L 61/50

(54) **COMMUNICATION METHOD, COMMUNICATION APPARATUS AND COMMUNICATION SYSTEM**

(30) Priority: 20.10.2023 CN 202311368380
(71) Applicant: HUAWEI TECHNOLOGIES CO., LTD., Shenzhen 518129 (CN)
(72) Inventor: MA, Chunyan, Shenzhen, Guangdong 518129 (CN); DING, Hui, Shenzhen, Guangdong 518129 (CN)
(74) Representative: Gill Jennings & Every LLP
(86) International application number: PCT/CN2024/106793
(87) International publication number: WO 2025/081940

(57) **Abstract**

This application provides a communication method, a communication apparatus, and a communication system. According to the method, an address allocation policy, a NAT policy, and a packet isolation policy can be configured for a relay terminal device, so that IP addresses are automatically configured for connected devices of the relay terminal device in batches, and packet routing of the connected devices is automatically controlled, thereby improving packet sending efficiency. In addition, because there is an association established between identification information of the connected devices and the IP addresses, security of allocating the IP addresses can be improved.

## Description

### CROSS-REFERENCE TO RELATED APPLICATIONS

This application claims priority to Chinese Patent Application No. 202311368380.X, filed with the China National Intellectual Property Administration on October 20, 2023 and entitled "COMMUNICATION METHOD, COMMUNICATION APPARATUS, AND COMMUNICATION SYSTEM", which is incorporated herein by reference in its entirety.

### TECHNICAL FIELD

This application relates to the field of wireless communication technologies, and in particular, to a communication method, a communication apparatus, and a communication system.

### BACKGROUND

In post-routing scenarios, one or more connected devices may be configured for a relay terminal device, and the connected devices may communicate with an application server via the relay terminal device.

To ensure normal communication of the connected devices, internet protocol (internet protocol, IP) addresses need to be allocated to the connected devices. Currently, the IP addresses of the connected devices of the relay terminal device are typically configured on the relay terminal device manually.

This address allocation method is inefficient and cannot support automation and batch processing.

### SUMMARY

This application provides a communication method, a communication apparatus, and a communication system, to efficiently allocate an IP address to a connected device of a relay terminal device.

According to a first aspect, an embodiment of this application provides a communication method. The method may be performed by a first device or a module (for example, a chip) of the first device, and the first device is a relay terminal device or a terminal management node. The method includes: obtaining an address allocation policy, where the address allocation policy includes a mapping relationship between identification information of at least one connected device of the relay terminal device and IP address information of the at least one connected device, where the at least one connected device includes a first connected device; and allocating an IP address to the first connected device according to the address allocation policy.

According to the foregoing solution, IP addresses can be automatically configured for connected devices of the relay terminal device in batches, thereby improving address allocation efficiency. In addition, because there is an association established between identification information of the connected devices and the IP addresses, security of allocating the IP addresses can be improved.

In a possible implementation method, the allocating the IP address to the first connected device according to the address allocation policy includes: receiving a request message from the first connected device, where the request message is used for requesting to allocate the IP address; and allocating the IP address to the first connected device based on the request message using the address allocation policy.

According to the foregoing solution, an IP address can be allocated to a connected device based on a request of the connected device, rather than being allocated to the connected device in any case. This can reduce unnecessary energy consumption overheads.

In a possible implementation method, the IP address information includes an IP address or an IP address segment.

According to the foregoing solution, one IP address can be configured for each connected device according to the address allocation policy, so that a fixed IP address can be configured for the connected device, thereby improving address allocation efficiency. Alternatively, a plurality of IP addresses can be configured for each connected device, so that the IP addresses are flexibly configured for the connected device.

In a possible implementation method, the first device is the relay terminal device; and the obtaining the address allocation policy includes: receiving the address allocation policy from a second device, where the second device is a unified data management network element, a home subscriber server, or an authentication authorization accounting server.

In a possible implementation method, the method further includes: receiving a network address translation (network address translation, NAT) policy from the second device, where the NAT policy includes a NAT indication and/or a NAT rule, where the NAT indication indicates whether to perform NAT on an IP address of a connected device of the relay terminal device, and the NAT rule indicates a trigger condition for performing NAT on the IP address of the connected device of the relay terminal device.

According to the foregoing solution, the relay terminal device can effectively control a packet of a connected device according to the NAT policy.

In a possible implementation method, the method further includes: receiving a packet isolation policy from the second device, where the packet isolation policy indicates whether packet isolation needs to be performed between different connected devices of the relay terminal device.

According to the foregoing solution, the relay terminal device can effectively control a packet of a connected device according to the packet isolation policy.

In a possible implementation method, the first device is the terminal management node; and the obtaining the address allocation policy includes: receiving the IP address information of the at least one connected device from a second device, where the second device is a unified data management network element, a home subscriber server, or an authentication authorization accounting server; and generating the address allocation policy based on the IP address information of the at least one connected device and the identification information of the at least one connected device.

In a possible implementation method, the method further includes: generating a NAT policy based on the IP address information of the at least one connected device; and sending the NAT policy to the relay terminal device, where the NAT policy includes a NAT indication and/or a NAT rule, where the NAT indication indicates whether to perform NAT on an IP address of a connected device of the relay terminal device, and the NAT rule indicates a trigger condition for performing NAT on the IP address of the connected device of the relay terminal device.

According to the foregoing solution, the relay terminal device can effectively control a packet of a connected device according to the NAT policy.

In a possible implementation method, the method further includes: generating a packet isolation policy, where the packet isolation policy indicates whether packet isolation needs to be performed between different connected devices of the relay terminal device; and sending the packet isolation policy to the relay terminal device.

According to the foregoing solution, the relay terminal device can effectively control a packet of a connected device according to the packet isolation policy.

In a possible implementation method, the terminal management node is a dynamic host configuration protocol (dynamic host configuration protocol, DHCP) server.

In a possible implementation method, the identification information is a MAC address, an electronic serial number, or a device identifier.

According to a second aspect, an embodiment of this application provides a communication apparatus. The apparatus may be a first device, or may be a module (for example, a chip) of the first device. The apparatus has a function of implementing any one of the implementation methods in the first aspect. The function may be implemented by hardware, or may be implemented by hardware executing corresponding software. The hardware or the software includes one or more modules corresponding to the function.

According to a third aspect, an embodiment of this application provides a communication apparatus, including units or means configured to perform steps of any one of the implementation methods in the first aspect.

According to a fourth aspect, an embodiment of this application provides a communication apparatus, including a processor and an interface circuit. The processor is configured to communicate with another apparatus via the interface circuit, and perform any one of the implementation methods in the first aspect. There are one or more processors.

According to a fifth aspect, an embodiment of this application provides a communication apparatus, including a processor. The processor is configured to invoke a program, to perform any one of the implementation methods in the first aspect. In addition, there may be one or more processors.

Optionally, the communication apparatus may further include a memory. The memory is coupled to the processor. The memory may be located inside or outside the apparatus.

According to a sixth aspect, an embodiment of this application provides a communication apparatus, including a processor. When the apparatus runs, the processor executes computer instructions, to cause the apparatus to perform any one of the implementation methods in the first aspect.

Optionally, the communication apparatus may further include a memory, and the memory is configured to store the computer instructions.

According to a seventh aspect, an embodiment of this application further provides a computer program product. The computer program product includes a computer program or instructions. When the computer program or the instructions are run by a communication apparatus, any one of the implementation methods in the first aspect is performed.

According to an eighth aspect, an embodiment of this application further provides a computer-readable storage medium. The computer-readable storage medium stores instructions, and when the instructions are run on a communication apparatus, any one of the implementation methods in the first aspect is performed.

According to a ninth aspect, an embodiment of this application further provides a chip system, including a processor configured to perform any one of the implementation methods in the first aspect.

According to a tenth aspect, an embodiment of this application further provides a communication system, including: a second device, configured to send an address allocation policy to a session management network element, where the address allocation policy includes a mapping relationship between identification information of at least one connected device of a relay terminal device and IP address information of the at least one connected device; and the session management network element, configured to send the address allocation policy to the relay terminal device, where the address allocation policy is used for allocating an IP address to the at least one connected device.

According to an eleventh aspect, an embodiment of this application further provides a communication system, including: a second device, configured to send IP address information of at least one connected device of a relay terminal device to a terminal management node; and the terminal management node, configured to generate an address allocation policy based on the IP address information of the at least one connected device and identification information of the at least one connected device, where the address allocation policy includes a mapping relationship between the identification information of the at least one connected device and the IP address information of the at least one connected device; and send the address allocation policy to the relay terminal device, where the address allocation policy is used for allocating an IP address to the at least one connected device.

### BRIEF DESCRIPTION OF DRAWINGS

FIG. 1(a) is a diagram of a communication system according to an embodiment of this application;
FIG. 1(b) is a diagram of a communication system according to an embodiment of this application;
FIG. 2(a) is a diagram of a 4G EPC architecture;
FIG. 2(b) is a diagram of a 5G NR architecture;
FIG. 3 is a schematic flowchart of a communication method according to an embodiment of this application;
FIG. 4(a) is a diagram of a method for configuring a policy by an HSS/a UDM;
FIG. 4(b) is a diagram of a method for configuring a policy by an AAA server;
FIG. 4(c) is a diagram of a method for configuring a policy by a terminal management node;
FIG. 5 is a schematic flowchart of a communication method according to an embodiment of this application;
FIG. 6 is a schematic flowchart of a communication method according to an embodiment of this application;
FIG. 7 is a diagram of a communication apparatus according to an embodiment of this application; and
FIG. 8 is a diagram of a communication apparatus according to an embodiment of this application.

### DESCRIPTION OF EMBODIMENTS

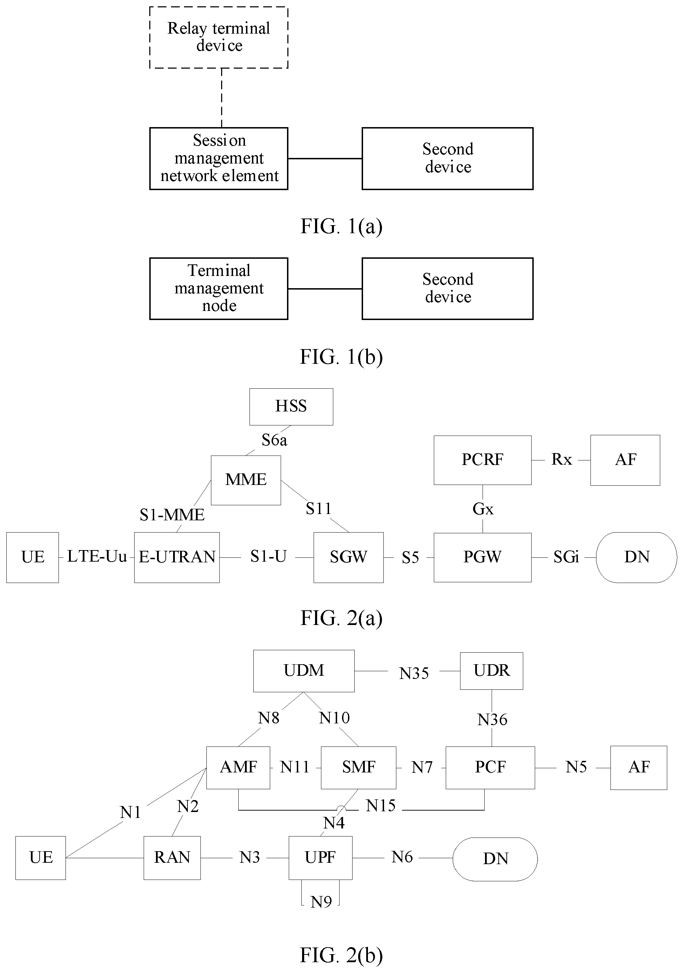

This application provides a communication system. Refer to FIG. 1(a). The system includes a session management network element and a second device. Optionally, the system further includes a relay terminal device. The system shown in FIG. 1(a) may be used in a network architecture shown in FIG. 2(a) or FIG. 2(b), or certainly, may be used in a future network architecture, for example, a 6th generation (6th generation, 6G) network architecture. This is not limited in this application.

In an implementation method, the session management network element in FIG. 1(a) may be a mobility management entity (mobility management entity, MME) in FIG. 2(a), the second device in FIG. 1(a) may be a home subscriber server (home subscriber server, HSS) in FIG. 2(a) or an authentication authorization accounting (authentication authorization accounting, AAA) server, and the relay terminal device in FIG. 1(a) may be a terminal device in FIG. 2(a) (where for example, the terminal device is UE in the figure) or another device (for example, a mobile wireless fidelity (mobile wireless fidelity, MiFi) device).

In another implementation method, the session management network element in FIG. 1(a) may be a session management function (session management function, SMF) network element in FIG. 2(b), the second device in FIG. 1(a) may be a unified data management (unified data management, UDM) network element in FIG. 2(b) or an AAA server, and the relay terminal device in FIG. 1(a) may be a terminal device in FIG. 2(b) (where for example, the terminal device is UE in the figure) or another device (for example, a MiFi device).

In another implementation method, the session management network element in FIG. 1(a) may be a device that has a function of an MME or an SMF network element in future communication such as 6G communication, and the second device may be a network element that has a function of an HSS, a UDM network element, or an AAA server in future communication such as 6G communication.

In an embodiment, the second device is configured to send an address allocation policy to the session management network element, where the address allocation policy includes a mapping relationship between identification information of at least one connected device of the relay terminal device and IP address information of the at least one connected device; and the session management network element is configured to send the address allocation policy to the relay terminal device, where the address allocation policy is used for allocating an IP address to the at least one connected device.

In a possible implementation method, the second device is further configured to send a NAT policy to the session management network element; and the session management network element is further configured to send the NAT policy to the relay terminal device, where the NAT policy includes a NAT indication and/or a NAT rule, where the NAT indication indicates whether to perform NAT on an IP address of a connected device of the relay terminal device, and the NAT rule indicates a trigger condition for performing NAT on the IP address of the connected device of the relay terminal device.

In a possible implementation method, the second device is further configured to send a packet isolation policy to the session management network element, where the packet isolation policy indicates whether packet isolation needs to be performed between different connected devices of the relay terminal device; and the session management network element is further configured to send the packet isolation policy to the relay terminal device.

For interaction between network elements in the system and specific execution, refer to the following method embodiments. Details are not described herein.

This application provides a communication system. Refer to FIG. 1(b). The system includes a terminal management node and a second device.

The system shown in FIG. 1(b) may be used in a network architecture shown in FIG. 2(a) or FIG. 2(b), or certainly, may be used in a future network architecture, for example, a 6G network architecture. This is not limited in this application.

In an implementation method, the terminal management node in FIG. 1(b) may be a DHCP server, and the second device in FIG. 1(b) may be an AAA server, an HSS in FIG. 2(a), or a UDM network element in FIG. 2(b).

In another implementation method, the terminal management node in FIG. 1(b) may be a device that has a function of a DHCP server in future communication such as 6G communication, and the second device may be a network element that has a function of an HSS, a UDM network element, or an AAA server in future communication such as 6G communication.

In an embodiment, the second device is configured to send IP address information of at least one connected device of a relay terminal device to the terminal management node; and the terminal management node is configured to generate an address allocation policy based on the IP address information of the at least one connected device and identification information of the at least one connected device, where the address allocation policy includes a mapping relationship between the identification information of the at least one connected device and the IP address information of the at least one connected device; and send the address allocation policy to the relay terminal device, where the address allocation policy is used for allocating an IP address to the at least one connected device.

In a possible implementation method, the terminal management node is further configured to generate a NAT policy based on the IP address information of the at least one connected device; and send the NAT policy to the relay terminal device, where the NAT policy includes a NAT indication and/or a NAT rule, where the NAT indication indicates whether to perform NAT on an IP address of a connected device of the relay terminal device, and the NAT rule indicates a trigger condition for performing NAT on the IP address of the connected device of the relay terminal device.

In a possible implementation method, the terminal management node is further configured to generate a packet isolation policy, where the packet isolation policy indicates whether packet isolation needs to be performed between different connected devices of the relay terminal device; and send the packet isolation policy to the relay terminal device.

For interaction between network elements in the system and specific execution, refer to the following method embodiments. Details are not described herein.

FIG. 2(a) is a diagram of a 4th generation (4th generation, 4G) evolved packet core (evolved packet core, EPC) architecture. Functions of main nodes in the architecture are described as follows.

An evolved universal terrestrial radio access network (evolved universal terrestrial radio access network, E-UTRAN) is a 4G radio access network, and an access network device in the E-UTRAN includes, for example, a 4G base station.

An MME is mainly responsible for access authentication and mobility management.

A serving gateway (serving gateway, SGW) is mainly responsible for session management, and roaming-based charging and policy enforcement in a roaming scenario.

A packet data network gateway (packet data network gateway, PGW) is mainly responsible for session management and policy and charging enforcement.

An HSS is mainly responsible for storing user subscription data information.

A policy and charging rules function (policy and charging rules function, PCRF) network element generates a control policy using an operator policy based on request information of an application function (application function, AF) network element, user subscription information, and the like, controls network behavior, and delivers the control policy to a control plane network element for policy enforcement.

A data network (data network, DN) is a network outside an operator network. The operator network may access a plurality of DNs, and a plurality of services may be deployed on the DN, to provide services such as data and/or voice for terminal devices. For example, the DN is a private network of a smart factory, a sensor installed in a workshop of the smart factory may be a terminal device, a control server of the sensor is deployed in the DN, and the control server may provide a service for the sensor. The sensor may communicate with the control server, to obtain instructions of the control server, transmit collected sensor data to the control server based on the instructions, and the like. For another example, the DN is an internal office network of a company, a mobile phone or a computer of an employee of the company may be a terminal device, and the mobile phone or the computer of the employee may access information, data resources, and the like in the internal office network of the company.

The terminal device may be user equipment (user equipment, UE), a mobile station, a mobile terminal device, or the like. The terminal device may be widely used in various scenarios, for example, device-to-device (device-to-device, D2D), vehicle-to-everything (vehicle-to-everything, V2X) communication, machine-type communication (machine-type communication, MTC), internet of things (internet of things, IoT), virtual reality, augmented reality, industrial control, self-driving, telemedicine, smart grid, smart furniture, smart office, smart wearable, smart transportation, and smart city. The terminal device may be a mobile phone, a tablet computer, a computer having a wireless transceiver function, a wearable device, a vehicle, an urban air transportation vehicle (for example, an uncrewed aerial vehicle or a helicopter), a ship, a robot, a mechanical arm, a smart home device, or the like. In FIG. 2(a), an example in which the terminal device is UE is used for illustration.

To cope with challenges of wireless broadband technologies and maintain a leading position of a 3rd generation partnership project (3rd Generation Partnership Project, 3GPP) network, the 3GPP standard group has formulated a next generation mobile communication network system (Next Generation System) architecture, which is referred to as a 5th generation (5th Generation, 5G) network architecture. The architecture supports access to a 5G core network (core network, CN) using a radio access technology (for example, a long term evolution (long term evolution, LTE) access technology or a 5G RAN access technology) defined by the 3GPP standard group, and supports access to a core network using a non-3GPP (non-3GPP) access technology via a non-3GPP interworking function (non-3GPP interworking function, N3IWF) or a next generation packet data gateway (next generation packet data gateway, ngPDG).

FIG. 2(b) is a diagram of a 5G new radio (new radio, NR) architecture. The 5G architecture shown in FIG. 2(b) may include an access network device and a core network device. The terminal device accesses a data network (DN) via the access network device and the core network device. The core network device includes but is not limited to some or all of the following network elements: an authentication server function (authentication server function, AUSF) network element (not shown in the figure), a UDM network element, a unified data repository (unified data repository, UDR) network element, a network repository function (network repository function, NRF) network element (not shown in the figure), a network exposure function (network exposure function, NEF) network element (not shown in the figure), an AF network element, a policy control function (policy control function, PCF) network element, an access and mobility management function (access and mobility management function, AMF) network element, an SMF network element, and a user plane function (user plane function, UPF) network element.

The access network device may be a radio access network (radio access network, RAN) device or a wired access network device. The radio access network device includes a 3GPP access network device, an untrusted non-3GPP access network device, and a trusted non-3GPP access network device. The 3GPP access network device includes but is not limited to: an evolved NodeB (evolved NodeB, eNodeB) in LTE, a next generation NodeB (next generation NodeB, gNB) in a 5G mobile communication system, and a base station or a module or unit that completes some functions of the base station in a future mobile communication system, for example, a central unit (central unit, CU) or a distributed unit (distributed unit, DU). The untrusted non-3GPP access network device includes but is not limited to: an untrusted non-3GPP access gateway or an N3IWF device, an untrusted wireless local area network (wireless local area network, WLAN) access point (access point, AP), a switch, and a router. The trusted non-3GPP access network device includes but is not limited to: a trusted non-3GPP access gateway, a trusted WLAN AP, a switch, and a router. The wired access network device includes but is not limited to: a wireline access gateway (wireline access gateway), a fixed-line phone network device, a switch, and a router. For ease of description, in this application, an example in which a base station is used as the access network device is used for description, and a base station that appears in the following may be replaced with an access network device.

The access network device and the terminal device may be at fixed locations, or may be movable. The access network device and the terminal device may be deployed on land, including an indoor or outdoor device, a handheld device, or a vehicle-mounted device; or may be deployed on a water surface; or may be deployed on a plane, a balloon, and an artificial satellite in the air. Application scenarios of the access network device and the terminal device are not limited in embodiments of this application.

The AMF network element includes functions such as mobility management or access authentication/authorization. In addition, the AMF is responsible for transferring a user policy between the terminal device and the PCF network element.

The SMF network element includes functions such as performing session management, enforcing a control policy delivered by the PCF network element, selecting a UPF network element, and allocating an IP address to the terminal device.

The UPF network element includes functions such as user plane data forwarding, session/flow-level charging statistics, or bandwidth limitation.

The UDM network element includes functions such as subscription data management or user access authorization.

The UDR includes functions for accessing subscription data, policy data, application data, and other types of data.

The NEF network element is configured to support exposure of capabilities and events.

The AF network element transfers a requirement of an application side for a network side, for example, a QoS requirement or user status event subscription. The AF may be a third-party functional entity, or may be an operator-deployed application service, for example, an IP multimedia subsystem (IP Multimedia Subsystem, IMS) voice call service. The AF network element includes an AF network element in a core network (that is, an AF network element of an operator) and a third-party AF network element (for example, an application server of an enterprise).

The PCF network element includes policy control functions such as session-level or service flow-level charging, QoS bandwidth guarantee, mobility management, or terminal device policy decision making. The PCF network element includes an access and mobility management policy control function (access and mobility management policy control function, AM PCF) network element and a session management policy control function (session management PCF, SM PCF) network element. The AM PCF network element is configured to formulate an AM policy and a user policy for the terminal device, and the AM PCF network element may also be referred to as a policy control network element that provides a service for the terminal device (PCF for UE). The SM PCF network element is configured to formulate a session management policy (session management policy, SM policy) for a session, and the SM PCF network element may also be referred to as a policy control function network element that provides a service for a protocol data unit (protocol data unit, PDU) session (PCF for a PDU session).

The NRF network element may be configured to provide a network element discovery function, and provide, based on a request of another network element, network element information corresponding to a network element type. The NRF network element further provides a network element management service, for example, network element registration, update, and deregistration, or network element status subscription and push.

The AUSF network element is responsible for authenticating a user, to determine whether the user or a device is allowed to access a network.

For a description of the DN in FIG. 2(b), refer to the descriptions of the DN in the architecture in FIG. 2(a). Details are not described again.

For a description of the terminal device in FIG. 2(b), refer to the descriptions of the terminal device in the architecture in FIG. 2(a). Details are not described again. In addition, in FIG. 2(b), an example in which the terminal device is UE is used for illustration.

Meanings of interface sequence numbers in FIG. 2(b) are as follows.
(1) N1 is an interface between the AMF network element and the terminal device, and may be configured to transfer non-access stratum (non-access stratum, NAS) signaling (for example, including a QoS rule from the AMF network element) to the terminal device, and the like.
(2) N2 is an interface between the AMF network element and the access network device, and may be configured to transfer radio bearer control information from a core network side to the access network device, and the like.
(3) N3 is an interface between the access network device and the UPF network element, and is mainly configured to transfer uplink and downlink user plane data between the access network device and the UPF network element.
(4) N4 is an interface between the SMF network element and the UPF network element, and may be configured to transfer information between a control plane and a user plane, including delivery of a forwarding rule, a QoS rule, a traffic statistics rule, and the like from the control plane to the user plane, and reporting of user plane information.
(5) N5 is an interface between the AF network element and the PCF network element, and may be configured to deliver an application service request and report a network event.
(6) N6 is an interface between the UPF network element and the DN, and is configured to transfer uplink and downlink user data flows between the UPF network element and the DN.
(7) N7 is an interface between the PCF network element and the SMF network element, and may be configured to deliver a PDU session granularity control policy and a service data flow granularity control policy.
(8) N8 is an interface between the AMF network element and the UDM network element, and may be used by the AMF network element to obtain subscription data and authentication data that are related to access and mobility management from the UDM network element, and used by the AMF network element to register information related to terminal device mobility management with the UDM network element, and the like.
(9) N9 is a user plane interface between UPF network elements, and is configured to transfer uplink and downlink user data flows between the UPF network elements.
(10) N10 is an interface between the SMF network element and the UDM network element, and may be used by the SMF network element to obtain subscription data related to session management from the UDM network element, and used by the SMF network element to register information related to a terminal device session with the UDM network element, and the like.
(11) N11 is an interface between the SMF network element and the AMF network element, and may be configured to transfer PDU session tunnel information between the access network device and the UPF, transfer a control message sent to the terminal device, transfer radio resource control information sent to the access network device, and the like.
(12) N15 is an interface between the PCF network element and the AMF network element, and may be configured to deliver a terminal device policy and an access control-related policy.
(13) N35 is an interface between the UDM network element and the UDR network element, and may be used by the UDM network element to obtain user subscription data information from the UDR network element.
(14) N36 is an interface between the PCF network element and the UDR network element, and may be used by the PCF network element to obtain policy-related subscription data and application data-related information from the UDR network element.

It may be understood that the foregoing network elements or functions may be network elements in a hardware device, or may be software functions running on dedicated hardware or virtualized functions instantiated on a platform (for example, a cloud platform). Optionally, the network element or function may be implemented by one device, may be jointly implemented by a plurality of devices, or may be a functional module in one device. This is not specifically limited in embodiments of this application.

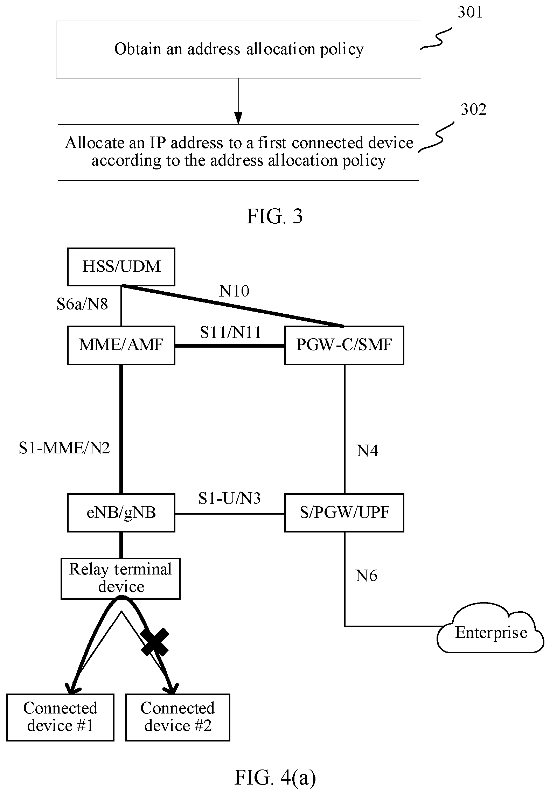

FIG. 3 is a schematic flowchart of a communication method according to an embodiment of this application. The method is performed by a first device or a module of the first device, and the first device is a relay terminal device or a terminal management node. The relay terminal device may also be referred to as a bridge device, a terminal device, or a relay device. For example, the relay terminal device may be specifically the terminal device in the architecture in FIG. 2(a) or FIG. 2(b), or may be a MiFi device. The terminal management node may be, for example, a DHCP server.

The method includes the following steps.

Step 301: The first device obtains an address allocation policy.

The address allocation policy includes a mapping relationship between identification information of at least one connected device of the relay terminal device and IP address information of the at least one connected device, where the at least one connected device includes at least a first connected device.

For example, the relay terminal device has M connected devices, and the address allocation policy may include a mapping relationship between identification information of N connected devices of the relay terminal device and IP address information of the N connected devices, where M is a positive integer, and N is a positive integer less than or equal to M. IP address information corresponding to identification information of any one of the N connected devices may be an IP address, or may be an IP address segment including a plurality of IP addresses, that is, the identification information of each of the connected devices may correspond to one or more IP addresses. Therefore, identification information of each of the N connected devices corresponds to a single IP address, or identification information of each of the N connected devices corresponds to an IP address segment, or identification information of some of the connected devices respectively corresponds to a single IP address while identification information of the remaining of the connected devices respectively corresponds to an IP address segment.

For example, the identification information of the connected device may be hardware information (for example, a medium access control (medium access control, MAC) address or an electronic serial number (electronic serial number, ESN)) of the connected device, or may be a device identifier (ID) of the connected device.

Step 302: The first device allocates an IP address to the first connected device according to the address allocation policy.

For example, any connected device (referred to as the first connected device below) of the relay terminal device sends a request message to the first device, where the request message is used for requesting to allocate the IP address, and specifically, the request message may be a DHCP request message. Optionally, the request message includes identification information of the first connected device, or the first device obtains the identification information of the first connected device based on a connection management message exchanged with the first connected device. The connection management message may be a connection management message in a Bluetooth, wireless fidelity (wireless fidelity, Wi-Fi), or PC5 establishment procedure. If the first device receives the request message, the first device allocates the IP address to the first connected device using the address allocation policy based on the request message and the identification information of the first connected device. For example, if the address allocation policy includes a mapping relationship between the identification information of the first connected device and an IP address segment (for example, an IP address 1 to an IP address 5) of the first connected device, the first device selects one of the IP address 1 to the IP address 5 and allocates the IP address to the first connected device. For another example, if the address allocation policy includes a mapping relationship between the identification information of the first connected device and an IP address (for example, an IP address 1) of the first connected device, the first device allocates the IP address 1 to the first connected device.

It should be noted that before receiving the request message, the relay terminal device may also obtain identification information of each connected device of the relay terminal device in advance. For example, in a connection procedure between the relay terminal device and the connected device, the relay terminal device obtains the identification information reported by the connected device.

According to the foregoing solution, IP addresses can be automatically configured for connected devices of the relay terminal device in batches, thereby improving address allocation efficiency. In addition, because there is an association established between identification information of the connected devices and the IP addresses, security of allocating the IP addresses can be improved.

The following provides detailed descriptions in different cases.

Case 1: The first device is the relay terminal device.

When the first device is the relay terminal device, step 301 may be specifically: The relay terminal device receives the address allocation policy from a second device, in other words, a UDM network element, an HSS, or an AAA server sends the address allocation policy to the relay terminal device.

FIG. 4(a) is a diagram of a method for configuring a policy by an HSS/a UDM. A 5G scenario is used as an example. The UDM network element sends the address allocation policy to an SMF network element, and then the SMF network element sends the address allocation policy to the relay terminal device via an AMF network element. A 4G scenario is used as an example. In a 4G packet data network (packet data network, PDN) connection establishment procedure, an MME may obtain the address allocation policy of the relay terminal device from the HSS based on an access request of the relay terminal device. Then, the MME sends the address allocation policy to a PGW via an SGW, and the PGW sends the address allocation policy to the relay terminal device through the following path: PGW->SGW->MME->eNB->relay terminal device. The address allocation policy may be carried in an extended protocol configuration options (extended protocol configuration options, ePCO) structure, and the ePCO structure is transparently transmitted on the SGW, the MME, and the eNB; or the address allocation policy may be carried, for sending, in an interface message that can be interpreted by the SGW, the MME, and the eNB.

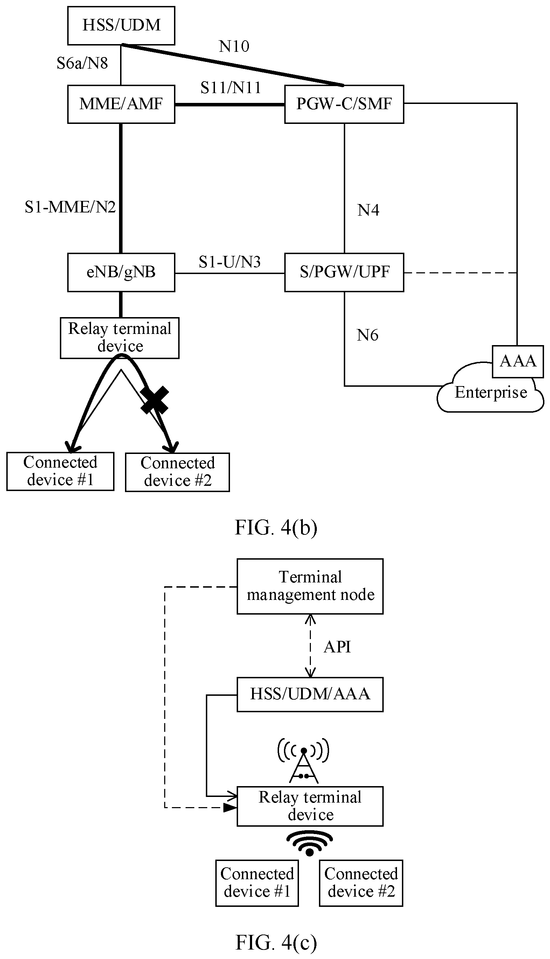

FIG. 4(b) is a diagram of a method for configuring a policy by an AAA server. A 5G scenario is used as an example. The AAA server sends the address allocation policy to a UPF network element, then the UPF network element sends the address allocation policy to an SMF network element, and the SMF network element sends the address allocation policy to the relay terminal device via an AMF network element. A 4G scenario is used as an example. The AAA server sends the address allocation policy to a PGW, and then the PGW sends the address allocation policy to the relay terminal device via an SGW, an MME, and an eNB. For details, refer to the descriptions in the example in FIG. 4(a).

In the case 1, in an implementation method, the second device may further send a NAT policy and/or a packet isolation policy to the relay terminal device, where the NAT policy includes a NAT indication and/or a NAT rule. The NAT policy and the packet isolation policy may be collectively referred to as a packet routing policy. The scenario in FIG. 4(a) is used as an example. In the 5G scenario, the UDM network element sends the NAT policy and/or the packet isolation policy to the SMF network element, and then the SMF network element sends the NAT policy and/or the packet isolation policy to the relay terminal device via the AMF network element. In the 4G scenario, for a specific manner in which the HSS sends the NAT policy and/or the packet isolation policy to the relay terminal device, refer to the foregoing manner in which the HSS sends the address allocation policy to the relay terminal device. The scenario in FIG. 4(b) is used as an example. In the 5G scenario, the AAA server sends the NAT policy and/or the packet isolation policy to the UPF network element, then the UPF network element sends the NAT policy and/or the packet isolation policy to the SMF network element, and the SMF network element sends the NAT policy and/or the packet isolation policy to the relay terminal device via the AMF network element. In the 4G scenario, for a specific manner in which the AAA server sends the NAT policy and/or the packet isolation policy to the relay terminal device, refer to the foregoing manner in which the AAA server sends the address allocation policy to the relay terminal device.

The following specifically describes the NAT policy and the packet isolation policy.

### 1. NAT indication

The NAT indication indicates whether to perform NAT on an IP address of a connected device of the relay terminal device.

The NAT indication includes a source network address translation (source network address translation, SNAT) indication and/or a destination network address translation (destination network address translation, DNAT) indication.

The SNAT indication indicates whether to perform SNAT on the IP address of the connected device of the relay terminal device. For example, when a value of the SNAT indication is true, it indicates that the relay terminal device needs to perform SNAT on the IP address of the connected device; or when the value of the SNAT indication is false, it indicates that the relay terminal device does not need to perform SNAT on the IP address of the connected device. SNAT means that for an uplink packet sent by the connected device to an application server, where a source address in the uplink packet is the IP address of the connected device, a destination address is an address of the application server, and the uplink packet first arrives at the relay terminal device, the relay terminal device replaces the source address (that is, the IP address of the connected device) in the uplink packet with an IP address of the relay terminal device. Then, the relay terminal device sends the uplink packet to the application server.

The DNAT indication indicates whether to perform DNAT on the IP address of the connected device of the relay terminal device. For example, when a value of the DNAT indication is true, it indicates that the relay terminal device needs to perform DNAT on the IP address of the connected device; or when the value of the DNAT indication is false, it indicates that the relay terminal device does not need to perform DNAT on the IP address of the connected device. DNAT means that for a downlink packet sent by the application server to the connected device, where a source address in the downlink packet is the address of the application server, a destination address is the IP address of the relay terminal device, and the downlink packet first arrives at the relay terminal device through a specific port, the relay terminal device replaces the destination address (that is, the IP address of the relay terminal device) in the downlink packet with the IP address of the connected device corresponding to the port. Then, the relay terminal device sends the downlink packet to the connected device.

### 2. NAT rule

The NAT rule indicates a trigger condition for performing NAT on the IP address of the connected device of the relay terminal device.

The NAT rule includes an SNAT rule and/or a DNAT rule.

The SNAT rule indicates a trigger condition for performing SNAT on the IP address of the connected device. In this embodiment of this application, the trigger condition is also referred to as a match condition. This is uniformly described herein, and details are not described below. For example, when the connected device sends the uplink packet to the application server, where the source address in the uplink packet is the IP address of the connected device, the destination address is the address of the application server, and the uplink packet first arrives at the relay terminal device, if the destination address is a specific IP address, the relay terminal device performs SNAT on the source address (that is, the IP address of the connected device) in the uplink packet, to be specific, replaces the source address with the IP address of the relay terminal device. For example, the specific address may be a campus IP address.

The DNAT rule indicates a trigger condition for performing DNAT on the IP address of the connected device. For example, when the application server sends the downlink packet to the connected device, where the source address in the downlink packet is the address of the application server, the destination address is the IP address of the relay terminal device, and the downlink packet first arrives at the relay terminal device through a specific port, if the source address is a specific IP address, the relay terminal device performs DNAT on the destination address (that is, the IP address of the relay terminal device) in the downlink packet, to be specific, replaces the destination address with the IP address of the connected device corresponding to the port. For example, the specific address may be a campus IP address.

For example, the following table 1 and table 2 provide specific examples of the IP address information of the connected device and the NAT policy.

**Table 1: array(FrameRouteInfo)**

| Attribute name | Data type | Description information |
|---|---|---|
| ipv4FrameRouteList | array(FrameRouteInfo) | ipv4FrameRouteList indicates a list including a plurality of pieces of FrameRouteInfo, and each piece of FrameRouteInfo includes an ipv4 address and a corresponding NAT policy |
| ipv6FrameRouteList | array(FrameRouteInfo) | ipv6FrameRouteList indicates a list including a plurality of pieces of FrameRouteInfo, and each piece of FrameRouteInfo includes an ipv6 address and a corresponding NAT policy |

**Table 2: FrameRouteInfo**

| Attribute name | Data type | Description information |
|---|---|---|
| ipv4Mask | IPv4AddrMask | Indicates an IPv4 mask |
| ipv6Prefix | Ipv6Prefix | Indicates an IPv6 prefix |
| Identification information | string | Identification information of a connected device |
| NAT indication | string | Indicates whether to perform NAT on an IP address |
| NAT rule | string | Indicates a trigger condition for performing NAT on an IP address of a connected device |

It should be noted that, for specific FrameRouteInfo, an IP address in FrameRouteInfo may be either ipv4Mask or ipv6Prefix.

### 3. Packet isolation policy

The packet isolation policy indicates whether packet isolation needs to be performed between different connected devices of the relay terminal device.

For example, a specific relay terminal device is connected to a connected device 1 and a connected device 2. When a destination address in a packet sent by the connected device 1 is an IP address of the connected device 2, if packet isolation needs to be performed, after receiving the packet, the relay terminal device does not directly send the packet to the connected device 2 through a port between the relay terminal device and the connected device 2, but sends the packet to a UPF, and then the UPF forwards the packet to the connected device 2 via the relay terminal device.

Case 2: The first device is the terminal management node.

When the first device is the terminal management node, step 301 may be specifically: The terminal management node receives the IP address information of the at least one connected device of the relay terminal device from a second device, in other words, a UDM network element, an HSS, or an AAA server sends the IP address information of the at least one connected device of the relay terminal device to the terminal management node. Then, the terminal management node generates the address allocation policy based on the IP address information of the at least one connected device of the relay terminal device and the identification information of the at least one connected device.

FIG. 4(c) is a diagram of a method for configuring a policy by a terminal management node. The HSS/the UDM network element/the AAA server sends the IP address information of the at least one connected device of the relay terminal device to the terminal management node (for example, the DHCP server) through an application programming interface (application programming interface, API), and then generates the address allocation policy for the terminal management node. For specific content of the address allocation policy, refer to the descriptions in the foregoing case 1. Details are not described herein again.

In an implementation method, after generating the address allocation policy, the terminal management node may send the address allocation policy to the relay terminal device, so that the relay terminal device can allocate an IP address to a connected device of the relay terminal device according to the address allocation policy.

In another implementation method, after generating the address allocation policy, the terminal management node may configure the address allocation policy locally. Subsequently, if a connected device sends, to the relay terminal device, a request message for requesting to allocate an IP address, the relay terminal device forwards the request message to the terminal management node, and then the terminal management node allocates the IP address to the connected device according to the address allocation policy, and sends a response message carrying the IP address of the connected device to the relay terminal device. Then, the terminal management node forwards the response message to the connected device, so that the IP address is allocated to the connected device. In this manner, if the terminal management node is the DHCP server, the relay terminal device may be considered as a DHCP relay, and the connected device may be considered as a DHCP client.

In an implementation method, the terminal management node may further generate a NAT policy based on the IP address information of the at least one connected device of the relay device, and send the NAT policy to the relay terminal device, so that the relay terminal device can process, according to the NAT policy, an uplink packet from the connected device or a downlink packet that needs to be sent to the connected device. For specific content of the NAT policy, refer to the descriptions in the foregoing case 1. Details are not described again.

In an implementation method, the terminal management node may further generate a packet isolation policy, and send the packet isolation policy to the relay terminal device, so that the relay terminal device can control, according to the packet isolation policy, packet sending between different connected devices of the relay terminal device. For specific content of the packet isolation policy, refer to the descriptions in the foregoing case 1. Details are not described again.

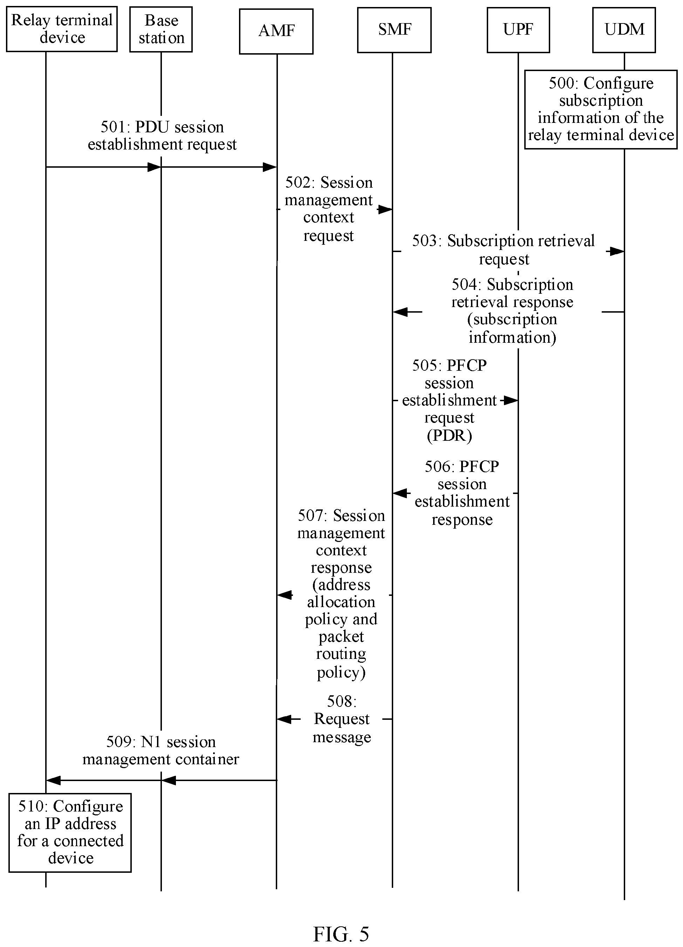

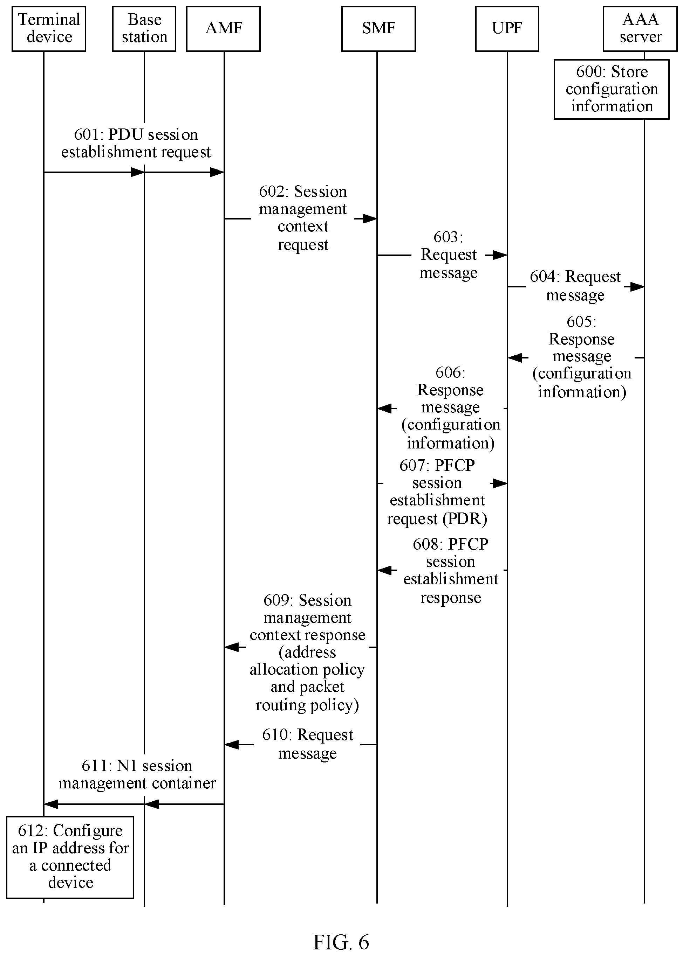

With reference to embodiments in FIG. 5 and FIG. 6, the following describes the foregoing embodiment in FIG. 3 in detail.

FIG. 5 is a schematic flowchart of a communication method according to an embodiment of this application. According to the method, a 5G network is used as an example to describe a process of allocating an IP address to a relay terminal device and a connected device of the relay terminal device. The method includes the following steps.

Step 500: Configure subscription information of the relay terminal device on a UDM.

The subscription information includes an address allocation policy. Optionally, the subscription information further includes at least one of an IP address of the relay terminal device, a subscription QoS parameter, or a charging policy. Optionally, the subscription information further includes a NAT policy and/or a packet isolation policy.

Step 501: The relay terminal device sends a PDU session establishment request (PDU Session Establishment Request) to an AMF via a base station. Correspondingly, the AMF receives the PDU session establishment request.

The PDU session establishment request carries a session management NAS container (SMNASContainer), and SMNASContainer includes at least one of a PDU session identifier (PDU Session ID), a PDU type (PDU Type), a session and service continuity (session and service continuity, SSC) mode (mode), or single network slice selection assistance information (single network slice selection assistance information, S-NSSAI).

Step 502: The AMF sends a session management context request to an SMF. Correspondingly, the SMF receives the session management context request.

The session management context request is used for requesting to create a session management context, and the session management context request includes SMNASContainer.

For example, the session management context request is an Nsmf_PDUSession_CreateSMContext request.

Step 503: The SMF sends a subscription retrieval request (subscription retrieval request) to the UDM. Correspondingly, the UDM receives the subscription retrieval request.

The subscription retrieval request is used for requesting subscription information of the relay terminal device. The subscription retrieval request includes an identifier of the relay terminal device, and may further include a DNN and/or S-NSSAI.

Step 504: The UDM sends a subscription retrieval response (subscription retrieval response) to the SMF. Correspondingly, the SMF receives the subscription retrieval response.

The subscription retrieval response includes the subscription information of the relay terminal device.

Step 505: The SMF sends a packet forwarding control protocol (packet forwarding control protocol, PFCP) session establishment request to a UPF. Correspondingly, the UPF receives the PFCP session establishment request.

The PFCP session establishment request includes a frame-route (Framed-Route) information element, the framed-route information element includes a packet detection rule (packet detection rule, PDR), and the PDR indicates an association relationship between a relay terminal device and a connected device of the relay terminal device. When the UPF receives a downlink packet, if the downlink packet needs to be sent to a specific connected device, the UPF may determine, according to the PDR, a relay terminal device corresponding to the connected device, and send the downlink packet to the relay terminal device through a PDU session of the relay terminal device.

It should be noted that the PFCP session establishment request may carry one framed-route information element, and the framed-route information element indicates an association relationship between a plurality of relay terminal devices and connected devices. Alternatively, the PFCP session establishment request may carry a plurality of framed-route information elements, and each framed-route information element indicates an association relationship between one relay terminal device and a connected device of the relay terminal device.

Step 506: The UPF sends a PFCP session establishment response to the SMF. Correspondingly, the SMF receives the PFCP session establishment response.

Step 507: The SMF sends a session management context response to the AMF. Correspondingly, the AMF receives the session management context response.

Optionally, the session management context response includes the address allocation policy, and optionally, further includes the NAT policy and/or the packet isolation policy.

For example, the session management context response is an Nsmf_PDUSession_CreateSMContext response.

Step 508: The SMF sends a request message to the AMF. Correspondingly, the AMF receives the request message.

The request message includes N2 session management information (N2 SM Information) sent to the base station and an N1 session management container (N1 SM Container) sent to the relay terminal device.

The N2 SM information includes a quality of service flow identifier (quality of service flow identifier, QFI), a QoS profile (QoS Profile), core network tunnel information (CN Tunnel Info), and the like.

The N1 SM container includes a PDU session establishment accept (PDU Session Establishment Accept), the IP address of the relay terminal device, and the address allocation policy, and optionally, further includes the NAT policy and/or the packet isolation policy.

For example, the request message is a Namf_Communication_N1N2MessageTransfer message.

Step 509: The AMF sends the N1 session management container to the relay terminal device. Correspondingly, the relay terminal device receives the N1 session management container.

The relay terminal device receives the N1 session management container, obtains the address allocation policy, and optionally, further obtains the NAT policy and/or the packet isolation policy, to complete a PDU session establishment process, and establish a user plane channel.

Optionally, the relay terminal device may configure a DHCP address pool according to the address allocation policy, to help allocate an IP address to a subsequently accessed connected device.

Step 510: The relay terminal device configures an IP address for a connected device.

When one or more connected devices of the relay terminal device request to access the relay terminal device, the relay terminal device may allocate an IP address to the connected device using the address allocation policy based on identification information of the connected device.

Subsequently, the relay terminal device may perform routing control on a packet of the connected device of the relay terminal device according to the NAT policy and/or the packet isolation policy. For example, the relay terminal device determines, according to the NAT policy, whether to perform SNAT on an uplink packet of the connected device or perform DNAT on a downlink packet of the connected device. For another example, the relay terminal device determines, according to the packet isolation policy, whether to perform packet isolation on a packet of the connected device of the relay terminal device.

According to the foregoing solution, the address allocation policy, the NAT policy, and the packet isolation policy can be configured for the relay terminal device, so that IP addresses are automatically configured for connected devices of the relay terminal device in batches, and packet routing of the connected devices is automatically controlled, thereby improving packet sending efficiency. In addition, because there is an association established between identification information of the connected devices and the IP addresses, security of allocating the IP addresses can be improved.

FIG. 6 is a schematic flowchart of a communication method according to an embodiment of this application. The method includes the following steps.

Step 600: Store configuration information on an AAA server.

The configuration information includes an address allocation policy. Optionally, the configuration information further includes a NAT policy and/or a packet isolation policy.

For detailed descriptions of the address allocation policy, the NAT policy, and the packet isolation policy, refer to step 500 in the embodiment in FIG. 5. Optionally, the configuration information further includes an IP address of a relay terminal device.

Step 601 and step 602 are the same as step 501 and step 502 in the embodiment in FIG. 5.

Step 603: An SMF sends a request message to a UPF. Correspondingly, the UPF receives the request message.

The request message includes identification information of the relay terminal device. The request message is used for requesting the address allocation policy, and optionally, is further used for requesting the NAT policy and/or the packet isolation policy.

Step 604: The UPF sends the request message to the AAA server. Correspondingly, the AAA server receives the request message.

The request message includes the identification information of the relay terminal device. The request message is used for requesting the address allocation policy, and optionally, is further used for requesting the NAT policy and/or the packet isolation policy.

Step 605: The AAA server sends a response message to the UPF. Correspondingly, the UPF receives the response message.

The response message includes the configuration information. The configuration information includes the address allocation policy, and optionally further includes the NAT policy and/or the packet isolation policy.

Specifically, if the AAA server determines that the relay terminal device is a routing behind device (routing behind mobile station), the AAA server encapsulates the address allocation policy corresponding to the relay terminal device in the response message and sends the response message to the UPF. Optionally, the response message further includes the NAT policy and/or the packet isolation policy.

Step 606: The UPF sends the response message to the SMF. Correspondingly, the SMF receives the response message.

The response message includes the configuration information. The configuration information includes the address allocation policy, and optionally further includes the NAT policy and/or the packet isolation policy.

Step 607 to step 612 are the same as step 505 to step 510 in the embodiment in FIG. 5.

According to the foregoing solution, the address allocation policy, the NAT policy, and the packet isolation policy can be configured for the relay terminal device, so that IP addresses are automatically configured for connected devices of the relay terminal device in batches, and packet routing of the connected devices is automatically controlled, thereby improving packet sending efficiency. In addition, because there is an association established between identification information of the connected devices and the IP addresses, security of allocating the IP addresses can be improved.

It may be understood that, to implement the functions in the foregoing embodiments, the first device (namely, the relay terminal device or the terminal management node) includes a corresponding hardware structure and/or software module for performing the functions. A person skilled in the art should be easily aware that, in this application, the units and method steps in the examples described with reference to embodiments disclosed in this application can be implemented by hardware or a combination of hardware and computer software. Whether a function is performed by hardware or hardware driven by computer software depends on particular application scenarios and design constraint conditions of the technical solutions.

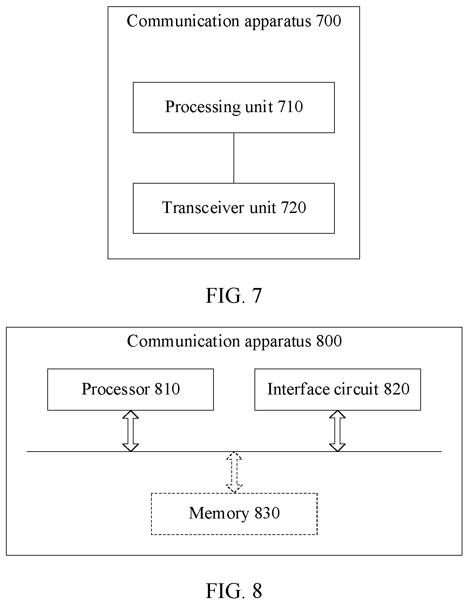

FIG. 7 and FIG. 8 are diagrams of structures of communication apparatuses according to embodiments of this application. These communication apparatuses may be configured to implement functions of the first device in the foregoing method embodiments. Therefore, beneficial effects of the foregoing method embodiments can also be achieved. In embodiments of this application, the communication apparatus may be the first device, or may be a module (for example, a chip) used in the first device.

The communication apparatus 700 shown in FIG. 7 includes a processing unit 710 and a transceiver unit 720. The communication apparatus 700 is configured to implement functions of the first device in the foregoing method embodiments.

When the communication apparatus 700 is configured to implement the functions of the first device in the foregoing method embodiments, the processing unit 710 is configured to: obtain an address allocation policy, where the address allocation policy includes a mapping relationship between identification information of at least one connected device of a relay terminal device and IP address information of the at least one connected device, where the at least one connected device includes a first connected device; and allocate an IP address to the first connected device according to the address allocation policy.

In a possible implementation method, that the processing unit 710 is configured to allocate the IP address to the first connected device according to the address allocation policy specifically includes: receiving a request message from the first connected device, where the request message is used for requesting to allocate the IP address; and allocating the IP address to the first connected device based on the request message using the address allocation policy.

In a possible implementation method, the first device is the relay terminal device; and that the processing unit 710 is configured to obtain the address allocation policy specifically includes: receiving the address allocation policy from a second device via the transceiver unit 720, where the second device is a unified data management network element, a home subscriber server, or an authentication authorization accounting server.

In a possible implementation method, the transceiver unit 720 is further configured to receive a NAT policy from the second device, where the NAT policy includes a NAT indication and/or a NAT rule, where the NAT indication indicates whether to perform NAT on an IP address of a connected device of the relay terminal device, and the NAT rule indicates a trigger condition for performing NAT on the IP address of the connected device of the relay terminal device.

In a possible implementation method, the transceiver unit 720 is further configured to receive a packet isolation policy from the second device, where the packet isolation policy indicates whether packet isolation needs to be performed between different connected devices of the relay terminal device.

In a possible implementation method, the first device is a terminal management node; and that the processing unit 710 is configured to obtain the address allocation policy specifically includes: receiving the IP address information of the at least one connected device from the second device via the transceiver unit 720, where the second device is a unified data management network element, a home subscriber server, or an authentication authorization accounting server; and generating the address allocation policy based on the IP address information of the at least one connected device and the identification information of the at least one connected device.

In a possible implementation method, the processing unit 710 is further configured to generate a NAT policy based on the IP address information of the at least one connected device; and the transceiver unit 720 is further configured to send the NAT policy to the relay terminal device, where the NAT policy includes a NAT indication and/or a NAT rule, where the NAT indication indicates whether to perform NAT on an IP address of a connected device of the relay terminal device, and the NAT rule indicates a trigger condition for performing NAT on the IP address of the connected device of the relay terminal device.

In a possible implementation method, the processing unit 710 is further configured to generate a packet isolation policy, where the packet isolation policy indicates whether packet isolation needs to be performed between different connected devices of the relay terminal device; and the transceiver unit 720 is further configured to send the packet isolation policy to the relay terminal device.

For more detailed descriptions about the processing unit 710 and the transceiver unit 720, directly refer to related descriptions in the foregoing method embodiments. Details are not described herein again.

The communication apparatus 800 shown in FIG. 8 includes a processor 810 and an interface circuit 820. The processor 810 and the interface circuit 820 are coupled to each other. It may be understood that the interface circuit 820 may be a transceiver or an input/output interface. Optionally, the communication apparatus 800 may further include a memory 830, configured to: store instructions executed by the processor 810, or store input data needed by the processor 810 to run the instructions, or store data generated after the processor 810 runs the instructions.

When the communication apparatus 800 is configured to implement the foregoing method embodiments, the processor 810 is configured to implement a function of the processing unit 710, and the interface circuit 820 is configured to implement a function of the transceiver unit 720.

It can be understood that the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor or any regular processor.

The method steps in embodiments of this application may be implemented in a hardware manner, or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk drive, a removable hard disk drive, a CD-ROM, or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in an access network device or a terminal device. Certainly, the processor and the storage medium may exist in the access network device or the terminal device as discrete components.

All or some of the foregoing embodiments may be implemented by using software, hardware, firmware, or any combination thereof. When software is used for implementing the embodiments, all or some of the embodiments may be implemented in a form of a computer program product. The computer program product includes one or more computer programs or instructions. When the computer programs or the instructions are loaded and executed on a computer, the procedures or functions in embodiments of this application are all or partially executed. The computer may be a general-purpose computer, a dedicated computer, a computer network, an access network device, a terminal device, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk drive, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In embodiments of this application, unless otherwise stated or there is a logic conflict, terms and/or descriptions in different embodiments are consistent and may be mutually referenced, and technical features in different embodiments may be combined into a new embodiment based on an internal logical relationship thereof.

In this application, "at least one" means one or more, and "a plurality of" means two or more. "And/or" describes an association between associated objects, and indicates that three relationships may exist. For example, A and/or B may indicate the following three cases: Only A exists, both A and B exist, and only B exists, where A and B may be singular or plural. In the text descriptions of this application, the character "/" generally indicates an "or" relationship between the associated objects. In a formula in this application, the character "/" indicates a "division" relationship between the associated objects.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A communication method, applied to a first device or a module of the first device, wherein the method comprises:
obtaining an address allocation policy, wherein the address allocation policy comprises a mapping relationship between identification information of at least one connected device of a relay terminal device and internet protocol IP address information of the at least one connected device, wherein the at least one connected device comprises a first connected device; and
allocating an IP address to the first connected device according to the address allocation policy.

2. The method according to claim 1, wherein the allocating the IP address to the first connected device according to the address allocation policy comprises:
receiving a request message from the first connected device, wherein the request message is used for requesting to allocate the IP address; and
allocating the IP address to the first connected device based on the request message using the address allocation policy.

3. The method according to claim 1 or 2, wherein the IP address information comprises an IP address or an IP address segment.

4. The method according to any one of claims 1 to 3, wherein the first device is the relay terminal device; and
the obtaining the address allocation policy comprises:
receiving the address allocation policy from a second device, wherein the second device is a unified data management network element, a home subscriber server, or an authentication authorization accounting server.

5. The method according to claim 4, wherein the method further comprises:
receiving a network address translation NAT policy from the second device, wherein the NAT policy comprises a NAT indication and/or a NAT rule, wherein
the NAT indication indicates whether to perform NAT on an IP address of a connected device of the relay terminal device; and
the NAT rule indicates a trigger condition for performing NAT on the IP address of the connected device of the relay terminal device.

6. The method according to claim 4 or 5, wherein the method further comprises:
receiving a packet isolation policy from the second device, wherein the packet isolation policy indicates whether packet isolation needs to be performed between different connected devices of the relay terminal device.

7. The method according to any one of claims 1 to 3, wherein the first device is a terminal management node; and
the obtaining the address allocation policy comprises:
receiving the IP address information of the at least one connected device from a second device, wherein the second device is a unified data management network element, a home subscriber server, or an authentication authorization accounting server; and
generating the address allocation policy based on the IP address information of the at least one connected device and the identification information of the at least one connected device.

8. The method according to claim 7, wherein the method further comprises:
generating a NAT policy based on the IP address information of the at least one connected device; and
sending the NAT policy to the relay terminal device, wherein
the NAT policy comprises a NAT indication and/or a NAT rule, wherein
the NAT indication indicates whether to perform NAT on an IP address of a connected device of the relay terminal device; and
the NAT rule indicates a trigger condition for performing NAT on the IP address of the connected device of the relay terminal device.

9. The method according to claim 7 or 8, wherein the method further comprises:
generating a packet isolation policy, wherein the packet isolation policy indicates whether packet isolation needs to be performed between different connected devices of the relay terminal device; and
sending the packet isolation policy to the relay terminal device.

10. The method according to any one of claims 7 to 9, wherein the terminal management node is a dynamic host configuration protocol DHCP server.

11. The method according to any one of claims 1 to 10, wherein the identification information is a medium access control MAC address, an electronic serial number, or a device identifier.

12. A communication apparatus, comprising a module configured to perform the method according to any one of claims 1 to 11.

13. A computer program product, wherein the computer program product comprises instructions, and when the instructions are run on a processor, the processor is caused to perform the method according to any one of claims 1 to 11.

14. A computer-readable storage medium, wherein the storage medium stores a computer program or instructions, and when the computer program or the instructions are executed by a communication apparatus, the method according to any one of claims 1 to 11 is implemented.

15. A communication system, comprising:
a second device, configured to send an address allocation policy to a session management network element, wherein the address allocation policy comprises a mapping relationship between identification information of at least one connected device of a relay terminal device and internet protocol IP address information of the at least one connected device; and
the session management network element, configured to send the address allocation policy to the relay terminal device, wherein the address allocation policy is used for allocating an IP address to the at least one connected device.

16. The system according to claim 15, wherein the second device is further configured to send a network address translation NAT policy to the session management network element; and
the session management network element is further configured to send the NAT policy to the relay terminal device, wherein
the NAT policy comprises a NAT indication and/or a NAT rule, wherein
the NAT indication indicates whether to perform NAT on an IP address of a connected device of the relay terminal device; and
the NAT rule indicates a trigger condition for performing NAT on the IP address of the connected device of the relay terminal device.

17. The system according to claim 15 or 16, wherein the second device is further configured to send a packet isolation policy to the session management network element, wherein the packet isolation policy indicates whether packet isolation needs to be performed between different connected devices of the relay terminal device; and
the session management network element is further configured to send the packet isolation policy to the relay terminal device.

18. A communication system, comprising:
a second device, configured to send internet protocol IP address information of at least one connected device of a relay terminal device to a terminal management node; and
the terminal management node, configured to generate an address allocation policy based on the IP address information of the at least one connected device and identification information of the at least one connected device, wherein the address allocation policy comprises a mapping relationship between the identification information of the at least one connected device and the IP address information of the at least one connected device; and send the address allocation policy to the relay terminal device, wherein the address allocation policy is used for allocating an IP address to the at least one connected device.

19. The system according to claim 18, wherein the terminal management node is further configured to generate a network address translation NAT policy based on the IP address information of the at least one connected device, and send the NAT policy to the relay terminal device, wherein
the NAT policy comprises a NAT indication and/or a NAT rule, wherein
the NAT indication indicates whether to perform NAT on an IP address of a connected device of the relay terminal device; and
the NAT rule indicates a trigger condition for performing NAT on the IP address of the connected device of the relay terminal device.

20. The system according to claim 18 or 19, wherein the terminal management node is further configured to generate a packet isolation policy, wherein the packet isolation policy indicates whether packet isolation needs to be performed between different connected devices of the relay terminal device; and send the packet isolation policy to the relay terminal device.
